# EUROPÄISCHE PATENTSCHRIFT

(11) **EP 3 523 572 B1**
(45) Veröffentlichungstag und Bekanntmachung des Hinweises auf die Patenterteilung: **07.06.2023**
(21) Anmeldenummer: 17778296.8
(22) Anmeldetag: 04.10.2017
(51) Int. Cl.: F21V 8/00, B29D 11/00, F21S 43/239, F21S 43/245

(54) **LICHTUMLENKVORRICHTUNG, VERFAHREN ZUR HERSTELLUNG EINER LICHTUMLENKVORRICHTUNG UND BELEUCHTUNGSVORRICHTUNG**
LIGHT DEFLECTION DEVICE, METHOD FOR PRODUCING A LIGHT DEFLECTION DEVICE, AND LIGHTING DEVICE
DISPOSITIF DE DÉFLEXION DE LA LUMIÈRE, PROCÉDÉ DE RÉALISATION D'UN DISPOSITIF DE DÉFLEXION DE LA LUMIÈRE ET DISPOSITIF D'ÉCLAIRAGE

(30) Priorität: 05.10.2016 DE 102016118885
(43) Veröffentlichungstag der Anmeldung: 14.08.2019
(73) Patentinhaber: temicon GmbH, 44263 Dortmund (DE)
(72) Erfinder: HUMBACH, Oliver, 44388 Dortmund (DE)
(74) Vertreter: Cohausz & Florack
(86) Internationale Anmeldenummer: PCT/EP2017/075218
(87) Internationale Veröffentlichungsnummer: WO 2018/065464

(56) Entgegenhaltungen:
- DE-A1-102014 200 369
- JP-B2- 3 905 661
- US-A1- 2007 223 247
- US-A1- 2011 163 066

## Beschreibung

Die Erfindung betrifft eine Lichtumlenkvorrichtung umfassend einen flächigen, transparenten Lichtleiter und eine zumindest bereichsweise auf dem Lichtleiter vorgesehene Mikrostruktur zur Auskopplung von in den Lichtleiter eingekoppeltem Licht. Die Erfindung betrifft weiterhin ein Verfahren zur Herstellung einer Lichtumlenkvorrichtung, eine Beleuchtungsvorrichtung und eine Verwendung einer Lichtumlenkvorrichtung oder Beleuchtungsvorrichtung.

Leuchten bestehen in der Regel aus einer oder mehreren Lichtquellen, die das erzeugte Licht in einen sehr großen Winkelbereich abstrahlen. Um den gewünschten Abstrahlwinkelbereich einzuschränken und anzupassen, sind entweder reflektierende oder durch Lichtbrechung strahlablenkende transparente Elemente notwendig. Reflektierende Elemente bestehen in der Regel aus metallischen Reflektoren oder mit Metallschichten beschichteten Reflektoren, deren Geometrie geeignet ist, die von der Lichtquelle kommenden Strahlen entsprechend abzulenken. Transmittierende Elemente weisen Oberflächenmodulationen auf, die nach dem Prinzip der Lichtbrechung die Strahlen wie gewünscht ablenken. In beiden Fällen wird jedoch eine nicht unerhebliche Bautiefe benötigt. Zudem sind solche Lichtelemente nicht durchsichtig.

Aus dem Stand der Technik sind auch Leuchten bekannt, die auf dem Prinzip der Lichtleitung in einem Lichtleiter auf der Basis totaler interner Reflexion funktionieren. In ihnen wird das Licht, das zuvor von einer Beleuchtungsquelle eingekoppelt wurde, geführt. Über eine oder beide Oberflächen der flächigen Seiten des Lichtleiters wird das Licht wieder ausgekoppelt. Zum Erreichen der Auskopplung muss die Oberfläche allerdings bearbeitet werden, entweder indem (partiell) ein Licht streuendes Material auf die Oberfläche aufgebracht wird (z.B. durch Aufdrucken) oder indem die Oberfläche partiell Unebenheiten aufweist (z.B. durch Einprägungen oder durch Behandlung der Oberfläche mit Laserstrahlung). Beide Varianten haben den Nachteil, dass die Durchsichtigkeit durch die Oberflächenmodulation beeinträchtigt werden kann und dass eine bevorzugte Auskopplung des Lichtes zu einer Seite sehr schwierig ist. Eine bevorzugt senkrechte Lichtauskopplung ist mit solchen Lösungen ebenfalls nur schwer zu erreichen. Eine Lichtumlenkung zur Flächennormale ist zwar möglich mit Gitterstrukturen, die das Licht aufgrund von Beugung auskoppeln, jedoch entstehen hierbei unerwünschte Farbeffekte.

Im Falle einer empfindlichen Mikrostruktur muss diese zudem vor Schmutz und Beschädigung geschützt werden. Dazu ist es entweder notwendig, eine weitere Schutzschicht vorzusehen, welche auf die Mikrostruktur aufgebracht wird. Alternativ ist denkbar, die Mikrostruktur zu schützen, indem der Lichtleiter mit der die Mikrostruktur aufweisenden Oberfläche beabstandet in einen Zwischenraum (beispielsweise einer Mehrfachverglasung) eingebracht wird. Dies bedeutet allerdings zusätzlichen Platzbedarf und Aufwand bei der Installation.

Die Lichtleitertechnik wurde insbesondere auf dem Anwendungsgebiet der Flachdisplaytechnik zur Hinterleuchtung von in Transmission arbeitenden Displays auf der Basis von Flüssigkristallen intensiv untersucht und weiterentwickelt. Die Aufgabenstellung in der Flachdisplaytechnik umfasst zwar ebenfalls eine dünne Bauweise und die effiziente Auskopplung von Licht aus dem Lichtleiter. Die Abstrahlung nur nach einer Seite hin und bevorzugt in Richtung der Flächennormale ist hier jedoch nicht notwendig, da hinter dem Lichtleiter in der Regel ein Reflektor und vor dem Lichtleiter strahlformende und homogenisierende optische Folien positioniert sind.

Aus der US 2011/0244187 A1 ist beispielsweise ein Verfahren bekannt, um ein optisches Muster herzustellen, sodass Licht einer Lichtquelle als Frontbeleuchtung oder Hintergrundbeleuchtung für ein elektronisches Gerät verwendet werden kann. Die auf einen Film geprägte Struktur weist Strukturelemente auf, welche stets flächige Geometrien zum Kontakt mit dem Lichtleiter aufweisen.

Ein weiteres Anwendungsgebiet von Lichtleitern sind Solarenergievorrichtungen, bei denen die Lichteinkopplung genutzt wird, um in umgekehrter Lichtrichtung Licht von außen über eine Oberflächenstruktur effizient in einen Lichtleiter einzukoppeln. So ist beispielsweise aus der WO 2011/124764 A1 eine laminierte Struktur bekannt, sodass optisch funktionale Kavitäten geformt werden. Auch hier weisen die Strukturelemente des auf den Lichtleiter aufgebrachten Films stets flächige Geometrien zum Kontakt mit dem Lichtleiter auf.

Die JP 3 905661 B2 betrifft eine Oberflächenlichtquelle zur Verwendung in Flüssigkristall-Displays, in der eine mit konvexen Abschnitten versehene Emissionslicht-Steuerplatte zum Sammeln von Licht unter Ausnutzung von Totalreflexion auf einer Emissionsfläche einer Lichtleiterplatte der Oberflächenlichtquelle angeordnet ist. Dabei sind jeweilige Spitzen der konvexen Abschnitte der Emissionslicht-Steuerplatte mittels eines ultraviolett-härtbaren Harzes mit der Emissionsfläche der Lichtleiterplatte verklebt.

Weiterhin stellt sich bei großflächigen Lichtleitern, welche als Beleuchtungsvorrichtung dienen sollen, die zusätzliche Problematik, das Licht möglichst über eine große Fläche möglichst gleichmäßig auszukoppeln.

Zudem stellt sich häufig das Problem, die Abstrahlcharakteristik der Beleuchtungsvorrichtung anpassen zu wollen. Dies kann jedoch regelmäßig nur dadurch erreicht werden, dass eine aufwendige Anpassung der Mikrostruktur erfolgt.

Es besteht daher weiterhin das Bedürfnis, insbesondere großflächige Beleuchtungsvorrichtungen in flacher Bauweise bereitzustellen, welche Licht effizient und bevorzugt zu einer Seite hin möglichst senkrecht abstrahlen. Diese sollen dabei möglichst unempfindlich, beispielsweise gegen Ablagerungen von Staub und physische Einwirkungen, sein. Dabei soll das Leuchtelement klar durchsichtig sein, um es möglichst flexibel einsetzen zu können, und sowohl im ausgeschalteten als auch im eingeschalteten Zustand Durchsicht ermöglichen. Dabei soll eine möglichst einfache Anpassung der Abstrahl- oder Auskoppelcharakteristik ermöglicht werden.

Vor diesem Hintergrund stellt sich der Erfindung somit die Aufgabe, eine Lichtumlenkvorrichtung, eine Beleuchtungsvorrichtung, ein Herstellungsverfahren und eine Verwendung vorzuschlagen, mit denen die aufgezeigten Probleme zumindest teilweise reduziert oder beseitigt werden können.

Gemäß einem ersten Aspekt der Erfindung wird die Aufgabe durch eine Lichtumlenkvorrichtung nach Patentanspruch 1 gelöst.

Entgegen den bisherigen Ansätzen aus dem Stand der Technik, kann dadurch, dass die Mikrostrukturelemente der Mikrostruktur jeweils eine im Wesentlichen punktförmige Geometrie zum Kontakt mit dem Lichtleiter bereitstellen, zum einen erreicht werden, dass bei Bedarf nur ein vergleichsweise geringer Bereich der Oberfläche des Lichtleiters zum Auskoppeln von Licht verwendet wird. Durch die im Wesentlichen punktförmige Geometrie weisen die Mikrostrukturelemente also im Querschnitt gesehen im Kontaktbereich zum Lichtleiter eine im Wesentlichen punktförmige Geometrie auf. Dadurch können insbesondere lange Lichtwege im Lichtleiter realisiert werden und auch für großflächige Lichtleiter kann eine homogene Lichtauskopplung erreicht werden. Auch hat sich gezeigt, dass eine hohe Transparenz und eine gezielte Abstrahlcharakteristik erreicht werden kann.

Die durch die Mikrostrukturelemente bereitgestellte Geometrie muss nicht zwangsweise dem effektiven Kontaktbereich oder Öffnungsbereich zwischen den Mikrostrukturelementen und dem Lichtleiter entsprechen, da dieser beispielsweise durch eine zusätzliche Anbindungsschicht modifiziert, insbesondere verbreitert sein kann. Dies ermöglicht jedoch eine flexible Anpassung der Größe des effektiven Kontaktbereichs zwischen den Mikrostrukturelementen und dem Lichtleiter. Denn durch die zunächst im Wesentlichen punktförmige bereitgestellte Geometrie der Mikrostrukturelemente im Bereich des Lichtleiters kann bedingt durch die Verbindungstechnik der Mikrostrukturelemente mit dem Lichtleiter der effektive Kontaktbereich in definierter Weise aufgeweitet werden. In einem Beispiel passen sich die Mikrostrukturelemente bei der Verbindung im Kontaktbereich an die planare Lichtleiteroberfläche an, was beispielsweise durch thermisch aktivierte oder nicht vollständig vernetzte (klebrige) Oberflächenschicht der Mikrostrukturelemente erreicht werden kann. In einem weiteren Beispiel prägen sich die Mikrostrukturelemente in die planare Lichtleiteroberfläche ein, was beispielsweise durch eine thermisch aktivierte oder nicht vollständig vernetzte (klebrige) Oberflächenschicht des Lichtleiters erreicht werden kann. In einem weiteren Beispiel kann der effektive Kontaktbereich durch ein unterschiedlich tiefes Eintauchen der Mikrostrukturelemente in die zusätzliche Anbindungsschicht modifiziert werden, sodass der effektive Kontaktbereich auch ohne eine Geometrieänderung der Mikrostrukturelemente selbst variabel eingestellt werden kann. Erfindungsgemäß ist die Breite des (definiert aufgeweiteten) effektiven Kontaktbereichs der Mikrostrukturelemente mit dem Lichtleiter im Bereich der im Wesentlichen punktförmigen Geometrie im Querschnitt gesehen höchstens 10 µm, vorzugsweise höchstens 5 µm breit.

Ausgehend von der im Wesentlichen punktförmigen Geometrie des dem Lichtleiter zugewandten Bereichs der Mikrostrukturelemente verbreitern sich die Mikrostrukturelemente vorzugsweise im Querschnitt gesehen zumindest abschnittsweise in die vom Lichtleiter abgewandte Richtung.

Die Mikrostrukturelemente können beispielsweise in unmittelbarem Kontakt oder mittelbarem Kontakt (beispielsweise über eine Anbindungsschicht) mit dem Lichtleiter stehen. Vorzugsweise ist die Mikrostruktur dabei stoffschlüssig mit dem Lichtleiter verbunden.

Unter einer Mikrostruktur wird dabei insbesondere eine gezielte Struktur verstanden, dessen charakteristische Dimensionen im Mikrometerbereich, das heißt im Bereich unterhalb von 1 mm, liegen. Da die Mikrostruktur für eine Lichtauskopplung sorgt, kann die Mikrostruktur auch als mikrooptische Struktur bezeichnet werden.

Unter einem flächigen, transparenten Lichtleiter wird insbesondere ein Bauteil verstanden, welches Licht über gewisse Strecken transportieren kann. Die Lichtleitung wird dabei durch Reflexion, beispielsweise durch Totalreflexion an der Grenzfläche des Lichtleiters erreicht. Hier weist der Lichtleiter beispielsweise ein Brechungsindex auf, welcher höher ist als derjenige des den Lichtleiter umgebenden Mediums. Unter Licht wird dabei der für das Auge sichtbare Teil der elektromagnetischen Strahlung verstanden, das heißt elektromagnetische Strahlung mit Wellenlängen von etwa 380 nm bis 780 nm oder eines Teils hiervon. Beispielsweise ist der Lichtleiter als eine eckige, insbesondere rechteckige Scheibe ausgebildet.

Der Lichtleiter weist vorzugsweise im Wesentlichen planparallele Oberflächen auf. Der Lichtleiter besteht beispielsweise aus Glas oder Kunststoff. Ein Lichtleiter aus Glas weist eine hohe Härte und Beständigkeit auf. Zudem wird Glas bereits in vielen Bauelementen, wie beispielsweise Fenstern oder Vitrinen ohnehin eingesetzt. Derartige Lichtleiter können durch Aufbringen der Auskopplungsschicht einfach mit einer Mikrostruktur versehen werden. Lichtleiter aus Kunststoff können ebenfalls eine hohe Beständigkeit aufweisen. Beispiele für einen Kunststoff sind Polymethylmethacrylat (PMMA), Polycarbonat (PC), Cycloolefincopolymer (COC), Polyurethan (PU), Polysiloxan, etwa Polydimethylsiloxan (PDMS) oder Flüssigsilikone (LSR = Liquid Silicone Rubber). Beispielsweise weist der Lichtleiter eine Dicke von mindestens 0,2 mm, bevorzugt mindestens 0,5 mm, weiter bevorzugt mindestens 1 mm und/oder eine Dicke von höchstens 15 mm, bevorzugt höchstens, 10 mm, weiter bevorzugt höchstens 8 mm auf.

Zwischen den Mikrostrukturelementen der Mikrostruktur befindet sich vorzugsweise ein Medium mit einem geringeren Brechungsindex als derjenige des Materials der Mikrostrukturelemente. Beispielsweise befindet sich zwischen den Mikrostrukturelementen ein gasförmiges Medium, vorzugsweise Luft. Beispielsweise ist der Brechungsindex des Mediums kleiner als 1,3, vorzugsweise kleiner als 1,2, weiter bevorzugt kleiner als 1,1.

Die zumindest bereichsweise auf den Lichtleiter vorgesehene Mikrostruktur kann beispielsweise in nur einem Teilbereich oder vollständig auf dem Lichtleiter vorgesehen sein. Vorzugsweise wird die Mikrostruktur auf den Lichtleiter aufgebracht, beispielsweise mittels einer Deckschicht.

Die erfindungsgemäße Lichtumlenkvorrichtung umfasst weiterhin eine zumindest bereichsweise auf den Lichtleiter flächig aufgebrachte, transparente Deckschicht, wobei die Mikrostruktur erfindungsgemäß zwischen der Deckschicht und dem Lichtleiter vorgesehen ist. Durch die Deckschicht kann die Mikrostruktur beispielsweise vor Verschmutzung und Beschädigungen geschützt werden. Die Mikrostruktur kann dabei durch die Deckschicht, durch den Lichtleiter, durch zusätzliche Elemente oder eine Kombination hiervon ausgebildet werden.

Grundsätzlich kann die Deckschicht als Platte oder Tafel ausgebildet sein. Bevorzugt ist die Deckschicht jedoch als Folie ausgebildet. Unter einer Folie wird insbesondere eine dünne Schicht (insbesondere mit einer Dicke kleiner als 1 mm) aus dem jeweiligen Material (zum Beispiel Kunststoff) verstanden. Beispielsweise lässt sich die Folie aufwickeln. Dabei weist die Folie vorteilhaft jedoch weiterhin eine ausreichende Festigkeit auf, um beispielsweise als äußere Schicht die Funktion einer Schutzschicht zu erfüllen.

Beispielsweise besteht die Deckschicht zumindest teilweise aus Glas oder einem Kunststoff. Es hat sich gezeigt, dass Ausgestaltungen der Deckschicht vorteilhaft aus Glas oder einem Kunststoff hergestellt werden können. Ein Kunststoff hat sich insbesondere bei der Ausbildung der Deckschicht als Folie als vorteilhaft gezeigt. Ein Kunststoff kann insbesondere ein transparentes, thermoplastisches Material sein. Der Kunststoff ist beispielsweise Polymethylmethacrylat (PMMA), Polycarbonat (PC), Cycloolefincopolymer (COC), Polyurethan (PU), Polysiloxan, etwa Polydimethylsiloxan (PDMS), oder Flüssigsilikon (LSR = Liquid Silicone Rubber). Ebenfalls ist jedoch denkbar, dass die Deckschicht aus einem transparenten Epoxidharz oder Acrylat hergestellt wird.

Beispielsweise weist die Deckschicht eine Dicke von höchstens 1000 µm, bevorzugt höchstens, 500 µm, weiter bevorzugt höchstens 300 µm und/oder eine Dicke von mindestens 50 µm, bevorzugt mindestens 100 µm, weiter bevorzugt mindestens 150 µm auf.

Erfindungsgemäß weist die Deckschicht auf der dem Lichtleiter zugewandten Oberfläche die Mikrostruktur zur Auskopplung von in den Lichtleiter eingekoppeltem Licht auf. Die Deckschicht kann so vorteilhaft als Träger für die Mikrostrukturelemente der Mikrostruktur dienen. Dabei sind die Mikrostrukturelemente vorzugsweise integral mit der Deckschicht ausgebildet. Die der Mikrostruktur gegenüberliegende Oberfläche der Deckschicht ist vorzugsweise im Wesentlichen plan. Die plane Oberfläche verläuft insbesondere im Wesentlichen parallel zu den Oberflächen des flächigen Lichtleiters. Die im Wesentlichen plane Oberfläche der Deckschicht kann insbesondere eine Außenseite der Lichtumlenkvorrichtung darstellen und insofern die äußere Schutzschicht darstellen bzw. eine zusätzliche Schutzschicht verzichtbar machen.

Gemäß einer bevorzugten Ausgestaltung der erfindungsgemäßen Lichtumlenkvorrichtung sind zumindest ein Teil (vorzugsweise alle) der Mikrostrukturelemente der Mikrostruktur durch separate Mikrokörper gebildet. Beispielsweise sind die Mikrostrukturelemente der Mikrostruktur ausschließlich durch zwischen Lichtleiter und Deckschicht eingebrachte Mikrokörper gebildet. Die Mikrokörper können die bereits beschriebene Geometrie der Mikrostruktur bereitstellen. Beispielsweise sind die Mikrokörper kugelförmig oder zylinderförmig ausgebildet. Die Mikrokörper sind bevorzugt nicht integral mit einer vorgesehenen Deckschicht ausgebildet, können aber in diese eingebettet und/oder stoffschlüssig mit dieser verbunden sein. Beispielsweise sind die Mikrokörper zu mindestens 10 %, vorzugsweise zu mindestens 30 %, weiter vorzugsweise zu mindestens 50 % ihrer Ausdehnung in der Deckschicht eingebettet. Dies ermöglicht eine in mechanischer und optischer Hinsicht vorteilhafte Verbindung der Mikrokörper mit der Deckschicht.

Gemäß einer bevorzugten Ausgestaltung der erfindungsgemäßen Lichtumlenkvorrichtung sind zumindest ein Teil der Mikrostrukturelemente der Mikrostruktur in den Lichtleiter eingeprägt. Der Lichtleiter verformt sich beispielsweise in den jeweiligen Bereichen. Dadurch können die Mikrostrukturelemente im Bereich der im Wesentlichen punktförmigen Geometrie zum Kontakt mit dem Lichtleiter zumindest teilweise in die der Mikrostruktur zugewandten Oberfläche des Lichtleiters eingeprägt werden, was beispielsweise durch eine thermisch aktivierte oder nicht vollständig vernetzte (klebrige) Oberflächenschicht des Lichtleiters erreicht werden kann. In Abhängigkeit von der Tiefe der Einprägung können die optischen Eigenschaften der Lichtumlenkvorrichtung modifiziert werden.

Gemäß einer bevorzugten Ausgestaltung der erfindungsgemäßen Lichtumlenkvorrichtung sind zumindest ein Teil (vorzugsweise alle) der Mikrostrukturelemente der Mikrostruktur mittels einer Anbindungsschicht mit dem Lichtleiter verbunden. Beispielsweise ist die Anbindungsschicht vollflächig oder bereichsweise auf dem Lichtleiter vorgesehen. Beispielsweise ist oder umfasst die Anbindungsschicht ein Haftmittel, beispielsweise einen Kleber oder einen (härtbaren) Lack. Durch die Anbindungsschicht kann die mechanische und optische Verbindung zwischen dem Lichtleiter und der Mikrostruktur verbessert werden.

Vorzugsweise beeinflusst die Anbindungsschicht die optischen Eigenschaften der Lichtumlenkvorrichtung im dadurch entstehenden Kontaktbereich zwischen

Mikrostruktur und Lichtleiter. Beispielsweise wird die zunächst durch die Mikrostrukturelemente bereitgestellte im Wesentlichen punktförmige Geometrie zum Kontakt mit dem Lichtleiter durch die Anbindungsschicht zu einer flächigen Anbindung modifiziert. Hierzu sind die Mikrostrukturelemente vorzugsweise zumindest teilweise in die Anbindungsschicht eingetaucht.

Erfindungsgemäß sind zumindest ein Teil (vorzugsweise alle) der Mikrostrukturelemente der Mikrostruktur im Querschnitt gesehen zumindest abschnittsweise konvex gewölbt. Hierdurch können vorteilhaft eine oder mehrere interne Totalreflexionen des auszukoppelnden Lichts erreicht werden, sodass eine Auskopplung von in den Lichtleiter eingekoppeltem Licht quer (insbesondere im Wesentlichen senkrecht) zur Oberfläche des Lichtleiters erreicht wird.

Da die Mikrostrukturelemente jeweils eine im Wesentlichen punktförmige Geometrie im Kontaktbereich mit dem Lichtleiter haben, sind die Mikrostrukturelemente beispielsweise sphärisch linsenförmig, asphärisch linsenförmig oder kuppelförmig geformt.

Gemäß einer bevorzugten Ausgestaltung der erfindungsgemäßen Lichtumlenkvorrichtung sind zumindest ein Teil der Mikrostrukturelemente der Mikrostruktur im Querschnitt gesehen zumindest abschnittsweise geradlinig ausgebildet. Da die Mikrostrukturelemente jeweils eine im Wesentlichen punktförmige Geometrie im Kontaktbereich mit dem Lichtleiter haben, können die Mikrostrukturelemente zum Beispiel kegelförmig oder pyramidenförmig ausgebildet sein.

Gemäß einer bevorzugten Ausgestaltung der erfindungsgemäßen Lichtumlenkvorrichtung ist die Mikrostruktur zur Auskopplung von in den Lichtleiter eingekoppeltem Licht zumindest teilweise mittels zumindest einer Totalreflexion innerhalb der Mikrostrukturelemente ausgebildet. Die Totalreflexion kann durch entsprechende Wahl von Geometrie und Material erreicht werden. Im Ergebnis wird erzielt, dass das Licht, nachdem es über den Kontaktbereich zwischen Lichtleiter und Mikrostrukturelement in das entsprechende Mikrostrukturelement übergetreten ist, vorwiegend auf Basis von einer Totalreflexion umgelenkt wird. Dies wiederum ermöglicht neben einer hohen Effizienz eine im Wesentlichen senkrechte Auskopplung zur Lichtleiteroberfläche. Darunter, dass das Licht vorwiegend oder hauptsächlich auf diese Weise ausgekoppelt wird, wird insbesondere verstanden, dass mindestens 50%, vorzugsweise mindesten 80%, weiter vorzugsweise mindestens 90% des ausgekoppelten Lichts aus Basis von Totalreflexion in den Mikrostrukturelementen ausgekoppelt wird.

Gemäß einer bevorzugten Ausgestaltung der erfindungsgemäßen Lichtumlenkvorrichtung ist die Mikrostruktur zur Auskopplung von in den Lichtleiter eingekoppeltem Licht quer zur Oberfläche des Lichtleiters ausgebildet. Durch die geometrische Form der Mikrostrukturelemente können maßgeschneiderte Lichtverteilungen bzw. Lichtverteilungskurven erzielt werden. Beispielsweise liegt ein Schwerpunkt der Verteilung des ausgekoppelten Lichts in der oder den gewünschten Richtungen, beispielsweise im Wesentlichen senkrecht (das heißt im Wesentlichen in Richtung der Flächennormale) oder unter einem bestimmen Winkel (beispielsweise +30° und/oder -30°) zur Flächennormalen. Dabei wird ein Großteil des ausgekoppelten Lichts in die gewünschte(n) Richtung(en) ausgekoppelt. Ein Großteil (erfindungsgemäß mindestens 50%, vorzugsweise mindestens 80%, weitere bevorzugt mindestens 90%) des ausgekoppelten Lichts wird in einen Winkelbereich von höchstens 30°, vorzugsweise höchstens 20°, weiter vorzugsweise höchstens 10° um die gewünschte(n) Richtung(en) herum abgegeben.

Gemäß einer bevorzugten Ausgestaltung der erfindungsgemäßen Lichtumlenkvorrichtung weisen die Mikrostrukturelemente der Mikrostruktur zumindest abschnittsweise eine im Wesentlichen konstante oder variierende Anordnungsdichte auf. Bei einer (auf makroskopischer Ebene) im Wesentlichen konstanten Anordnungsdichte können die Strukturelemente beispielsweise regelmäßig oder stochastisch verteilt angeordnet sein. Durch eine im Wesentlichen konstante Anordnungsdichte kann die Mikrostruktur besonders wirtschaftlich hergestellt werden. Auch für ein Aufbringen der Auskopplungsschicht auf den Lichtleiter ist die Fehleranfälligkeit in Bezug auf eine Fehlpositionierung reduziert. Durch eine (auf makroskopischer Ebene) variierende Anordnungsdichte kann die Abstrahlcharakteristik gezielt beeinflusst werden. Dadurch kann beispielsweise eine durch die Auskopplung verursachte abnehmende Lichtmenge entlang des Lichtleiters berücksichtigt und insbesondere kompensiert werden.

Gemäß einem zweiten Aspekt der Erfindung wird die eingangs genannte Aufgabe durch ein Verfahren zur Herstellung einer Lichtumlenkvorrichtung nach Patentanspruch 9 gelöst.

Wie bereits ausgeführt, kann entgegen den bisherigen Ansätzen aus dem Stand der Technik durch eine im Wesentlichen punktförmige Geometrie der Mikrostrukturelemente im Kontaktbereich mit dem Lichtleiter insbesondere lange Lichtwege im Lichtleiter bei hoher Transparenz erreicht werden. Zudem kann eine flexible Anpassung der Größe des effektiven Kontaktbereichs oder Öffnungsbereichs zwischen den Mikrostrukturelementen und dem Lichtleiter ermöglicht werden, da die dem Lichtleiter zugewandte im Wesentlichen punktförmige Geometrie der Mikrostrukturelemente etwa durch ein unterschiedlich tiefes Eintauchen der Mikrostrukturelemente in eine zusätzliche Anbindungsschicht modifiziert werden kann, sodass der effektive Kontaktbereich auch ohne eine Geometrieänderung der Mikrostrukturelemente selbst variabel eingestellt werden kann.

Die Mikrostruktur wird bevorzugt mittels einer zusätzlichen Schicht, beispielsweise einer Platte oder Folie, auf den Lichtleiter aufgebracht und dadurch mit der Mikrostruktur versehen.

Gemäß dem erfindungsgemäßen Verfahren umfasst das Verfahren weiterhin: Aufbringen einer flächigen, transparenten Deckschicht zumindest bereichsweise auf den Lichtleiter, wobei die Mikrostruktur zwischen dem Lichtleiter und der Deckschicht vorgesehen wird. Die Deckschicht kann vorteilhaft die Mikrostruktur vor Beschädigung und Verschmutzung schützen. Bevorzugt ist die Mikrostruktur auf der Deckschicht vorgesehen, beispielsweise auf diese aufgebracht oder integral mit dieser ausgebildet. Die Deckschicht kann dann zusammen mit der Deckschicht auf den Lichtleiter aufgebracht werden.

Beispielsweise wird die Mikrostruktur durch Replikation von einer Urform, welche ein Negativ der Mikrostruktur aufweist, auf der Deckschicht ausgebildet. Die Replikation erfolgt beispielsweise durch UV-Prägen, Heißprägen oder Extrusion. Beispielsweise wird ein Roll-to-Roll-Prozess oder ein Roll-to-Plate-Prozess verwendet. Die Urform (beispielsweise eine Rolle oder Platte) wird vorzugsweise durch Lithographie, insbesondere UV-Lithographie, Laserlithographie oder Lithographie mit anschließendem Ätzverfahren, Mikrozerspanung oder Laserablation gefertigt.

Gemäß einer bevorzugten Ausgestaltung des erfindungsgemäßen Verfahrens werden die Mikrostrukturelemente der Mikrostruktur durch separate Mikrokörper bereitgestellt, welche zwischen der Deckschicht und dem Lichtleiter angeordnet werden. Beispielsweise werden die Mikrokörper auf den Lichtleiter aufgebracht und die Deckschicht wird anschließend auf den mit den Mikrokörpern versehenen Lichtleiter aufgebracht. Alternativ kann jedoch auch die Deckschicht mit den Mikrokörpern versehen werden. Anschließend kann die mit den Mikrokörpern versehene Deckschicht auf den Lichtleiter aufgebracht werden.

Beispielsweise werden die Mikrokörper in die Deckschicht eingebettet und/oder stoffschlüssig mit dieser verbunden. Beispielsweise sind die Mikrokörper zu mindestens 10 %, vorzugsweise zu mindestens 30 %, weiter vorzugsweise zu mindestens 50 % ihrer (senkrecht zum Lichtleiter verlaufenden) Ausdehnung in der Deckschicht eingebettet. Dies ermöglicht eine in mechanischer und optischer Hinsicht vorteilhafte Verbindung der Mikrokörper mit der Deckschicht.

Gemäß einer bevorzugten Ausgestaltung des erfindungsgemäßen Verfahrens umfasst das Versehen des Lichtleiters mit der Mikrostruktur ein zumindest teilweises Anpassen zumindest eines Teils der Mikrostrukturelemente im Bereich der im Wesentlichen punktförmigen Geometrie an den Lichtleiter. Dabei passt sich beispielsweise das jeweilige Mikrostrukturelement an der punktförmigen Geometrie an die planaren Oberfläche des Lichtleiters an. Das kann beispielsweise durch thermisch aktivierte oder nicht vollständig vernetzte (klebrige) Oberflächenschicht der Mikrostrukturelemente erreicht werden. In Abhängigkeit vom Grad der Anpassung können die optischen Eigenschaften der Lichtumlenkvorrichtung modifiziert werden.

Gemäß einer bevorzugten Ausgestaltung des erfindungsgemäßen Verfahrens umfasst das Versehen des Lichtleiters mit der Mikrostruktur ein zumindest teilweises Einprägen zumindest eines Teils der Mikrostrukturelemente in den Lichtleiter. Dabei prägt sich beispielsweise das jeweilige Mikrostrukturelement an der punktförmigen Geometrie in die planaren Oberfläche des Lichtleiters ein. Das beispielsweise durch eine thermisch aktivierte oder nicht vollständig vernetzte (klebrige) Oberflächenschicht des Lichtleiters erreicht werden. In Abhängigkeit von der Tiefe der Einprägung können die optischen Eigenschaften der Lichtumlenkvorrichtung modifiziert werden.

Gemäß einer bevorzugten Ausgestaltung des erfindungsgemäßen Verfahrens umfasst das Verfahren weiterhin: Aufbringen einer Anbindungsschicht auf den Lichtleiter, wobei das Versehen des Lichtleiters der Mikrostruktur auf den Lichtleiter ein zumindest teilweises Eintauchen zumindest eines Teils der Mikrostrukturelemente in die Anbindungsschicht umfasst.

Die Anbindungsschicht ist bevorzugt ein Haftmittel, beispielsweise ein Kleber oder ein (härtbarer) Lack. Eine härtbare Anbindungsschicht kann beispielsweise mittels UV-Strahlung, chemisch oder thermisch härtbar sein. Beispielsweise hat die Anbindungsschicht einen vergleichbaren oder den gleichen Brechungsindex wie die Mikrostrukturelemente und/oder der Lichtleiter.

Wie bereits ausgeführt, kann durch die Anbindungsschicht und das Eintauchen der Mikrostrukturelemente der effektive Kontaktbereich oder Öffnungsbereich zwischen Lichtleiter und dem jeweiligen Strukturelement modifiziert, insbesondere vergrößert werden. Insbesondere kann die Mikrostruktur definiert in die Anbindungsschicht eingetaucht werden, sodass ein gezielter Kontaktbereich und damit eine gezielte Abstrahlcharakteristik eingestellt wird.

Gemäß einem dritten Aspekt wird die eingangs genannte Aufgabe durch eine Beleuchtungsvorrichtung gelöst, umfassend eine erfindungsgemäße Lichtumlenkvorrichtung, und zumindest eine an zumindest einem Rand des Lichtleiters angeordnete Beleuchtungsquelle zur Einkopplung von Licht über den zumindest einen Rand des Lichtleiters.

Die Beleuchtungsvorrichtung kann beispielsweise als transparentes, scheibenförmiges Beleuchtungselement angesehen werden. Eine Beleuchtungsquelle kann beispielsweise eine oder mehrere Lichtquellen aufweisen, beispielsweise eine oder mehrere Leuchtdioden (LED). Beispielsweise kann eine Leiste aus mehreren Lichtquellen (beispielsweise aus mehreren LEDs) entlang des Rands des Lichtleiters angeordnet sein. Beispielsweise sind Leuchtdioden für rotes, grünes, blaues und/oder weißes Licht vorgesehen.

Die zumindest eine Beleuchtungsquelle ist vorzugsweise zumindest bereichsweise auf einen Rand des Lichtleiters aufgebracht, beispielsweise stoffschlüssig mit dem Rand verbunden. Dies kann insbesondere Verluste beim Einkoppeln des Lichts reduzieren.

Beispielsweise umfasst die Beleuchtungsvorrichtung eine erste an einem ersten Rand des Lichtleiters angeordnete Beleuchtungsquelle zur Einkopplung von Licht über den ersten Rand des Lichtleiters und zumindest eine zweite an einem zweiten Rand des Lichtleiters angeordnete Beleuchtungsquelle zur Einkopplung von Licht über den zweiten Rand des Lichtleiters. Das Vorsehen von einer ersten und einer zweiten Beleuchtungsquelle an verschiedenen Rändern ermöglicht eine homogene und flexible Beleuchtung durch die Beleuchtungsvorrichtung. Um die Anpassungsfähigkeit und Homogenität der Beleuchtungsvorrichtung weiter zu verbessern, kann die Beleuchtungsvorrichtung vorzugsweise auch noch weitere (beispielsweise eine dritte, vierte oder mehr) an einem entsprechenden Rand des Lichtleiters angeordnete Beleuchtungsquelle zur Einkopplung von Licht über den entsprechenden Rand des Lichtleiters aufweisen.

Gemäß einem vierten Aspekt der Erfindung wird die eingangs genannte Aufgabe auch durch eine Verwendung einer erfindungsgemäßen Lichtumlenkvorrichtung oder einer erfindungsgemäßen Beleuchtungsvorrichtung für ein raumbildendes Bauelement, für eine Raumleuchte, für Leuchten im Außenbereich, für Leuchten in Fahrzeugen oder für eine Displaybeleuchtung gelöst. Unter einem raumbildenden Bauelement wird beispielsweise ein (Schau-)Fenster (beispielsweise einer Fassade oder einer Vitrine), eine Trennwand, eine Brüstung, eine Ablagefläche, eine Werbefläche oder ein Deckenelement verstanden. Ein Fenster kann insbesondere ein Mehrscheibenisolierglas (MIG) sein, bei dem eine der Scheiben eine erfindungsgemäße Lichtumlenkvorrichtung oder eine erfindungsgemäße Beleuchtungsvorrichtung ist oder umfasst.

Es hat sich gezeigt, dass die beschriebene Lichtumlenkvorrichtung und die beschriebene Beleuchtungsvorrichtung sich zur Verwendung für die beschriebenen Zwecke eignen, da bei derartigen Einsatzzwecken in der Regel eine hohe Beständigkeit bei im Wesentlichen senkrechter Lichtauskopplung gefordert wird und zudem eine hohe Effizienz der Beleuchtung erwartet wird.

Die zuvor in dieser Beschreibung beschriebenen beispielhaften Ausgestaltungen der vorliegenden Erfindung sollen auch in allen Kombinationen miteinander offenbart verstanden werden. Insbesondere sollen beispielhafte Ausgestaltungen in Bezug auf die unterschiedlichen Aspekte als offenbart verstanden werden. So soll beispielsweise durch die Beschreibung von Verfahrensschritten gemäß bevorzugter Ausführungsformen des Verfahrens auch eine entsprechend hergestellte Lichtumlenkvorrichtung offenbart sein. Ebenfalls sollen durch die Beschreibung der Lichtumlenkvorrichtung entsprechende Ausgestaltungen des Verfahrens zur Herstellung offenbart sein.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die Figuren sollen jedoch nur dem Zwecke der Verdeutlichung, nicht aber zur Bestimmung des Schutzbereiches der Erfindung dienen. Die Figuren sind nicht maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

In der Zeichnung zeigt
- Fig. 1a, b: schematische Querschnittsdarstellungen von Ausführungsbeispielen erfindungsgemäßer Lichtumlenkvorrichtungen;
- Fig. 1c-f: schematische Querschnittsdarstellungen zur Veranschaulichung beispielhafter Herstellungsverfahren von Ausführungsbeispielen erfindungsgemäßer Lichtumlenkvorrichtungen;
- Fig. 2a, b: schematische Darstellungen zur Veranschaulichung der Lichtauskopplung durch die Ausführungsbeispiele aus Fig. 1;
- Fig. 3a-e: schematische perspektivische Darstellungen unterschiedlicher Mikrostrukturelemente mit im Wesentlichen punktförmiger Geometrie zum Kontakt mit dem Lichtleiter;
- Fig. 4a, b: eine schematische Darstellung eines Ausführungsbeispiels einer erfindungsgemäßen Beleuchtungsvorrichtung;
- Fig. 5a-d: beispielhafte Lichtverteilungskurven der Lichtauskopplung mittels Ausführungsbeispielen der erfindungsgemäßen Lichtumlenkvorrichtung.

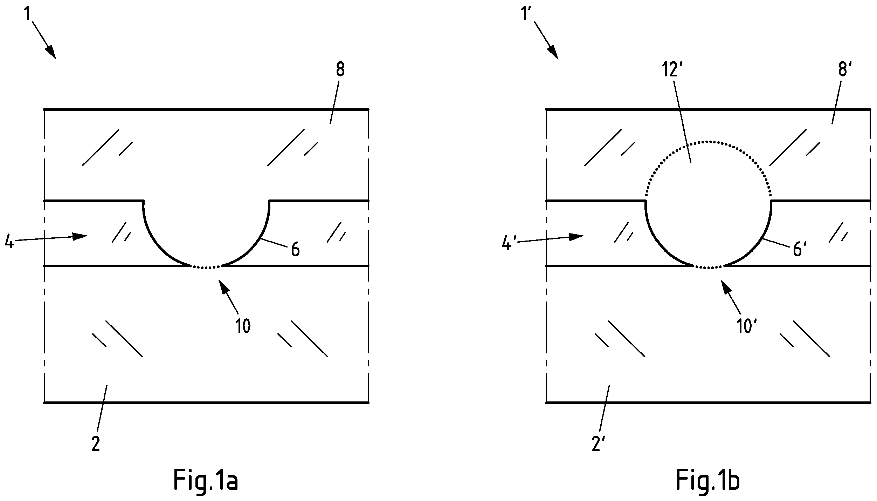

Fig. 1a, b zeigen zunächst schematische Querschnittsdarstellungen von Ausführungsbeispielen erfindungsgemäßer Lichtumlenkvorrichtungen. Fig. 1a zeigt eine Lichtumlenkvorrichtung 1. Die Lichtumlenkvorrichtung umfasst einen flächigen, transparenten Lichtleiter 2 und eine auf dem Lichtleiter 2 vorgesehene Mikrostruktur 4 zur Auskopplung von in den Lichtleiter 2 eingekoppeltem Licht. Exemplarisch ist ein Mikrostrukturelement 6 der Mikrostruktur dargestellt. Die Mikrostrukturelemente 6 weisen jeweils zunächst eine im Wesentlichen punktförmige Geometrie zum Kontakt mit dem Lichtleiter 2 auf.

Die Lichtumlenkvorrichtung weist eine auf den Lichtleiter 2 flächig aufgebrachte, transparente Deckschicht 8 auf. Die Mikrostruktur 4 ist zwischen der Deckschicht 8 und dem Lichtleiter 2 vorgesehen. Zwischen den Mikrostrukturelementen ist ein Medium mit einem Brechungsindex, welcher geringer ist als derjenige der Mikrostrukturelemente 6, vorgesehen, beispielsweise Luft. Die Deckschicht 8 weist auf der dem Lichtleiter 2 zugewandten Oberfläche die Mikrostruktur 4 zur Auskopplung von in den Lichtleiter 2 eingekoppeltem Licht auf. Die Mikrostrukturelemente 6 sind im Querschnitt gesehen zumindest abschnittsweise konvex gewölbt. In diesem Fall sind die Mikrostrukturelemente 6 sphärisch linsenförmig ausgebildet.

Im Kontaktbereich der punktförmigen Geometrie der Mikrostrukturelemente 6 mit dem Lichtleiter 2 ist eine Anbindungsschicht (nicht dargestellt) vorgesehen, sodass ein effektiver Kontaktbereich oder Öffnungsbereich 10 entsteht, welcher in Abhängigkeit von der Eindringtiefe der Mikrostrukturelemente 6 in die Anbindungsschicht verbreitert ist.

Fig. 1b zeigt ein weiteres Ausführungsbeispiel einer Lichtumlenkvorrichtung 1'. Die Lichtumlenkvorrichtung 1' ist ähnlich zu der Lichtumlenkvorrichtung 1. Daher soll im Folgenden nur auf die Unterschiede eingegangen werden. Im Unterschied zu der Lichtumlenkvorrichtung 1 sind bei der Lichtumlenkvorrichtung 1' die Mikrostrukturelemente 6' der Mikrostruktur 4' durch separate Mikrokörper 12' gebildet. Die Mikrokörper 12' sind zwischen der Deckschicht 8' und dem Lichtleiter 2' angeordnet. Die Mikrokörper 12' sind dabei in die Deckschicht 8' eingebettet und stoffschlüssig mit dieser verbunden. Die Mikrokörper 12' sind zu etwa 50 % ihrer Ausdehnung in der Deckschicht 8' eingebettet.

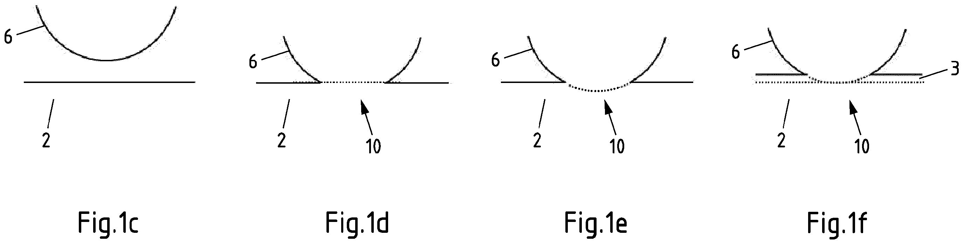

Fig. 1c-f zeigen schematische Querschnittsdarstellungen zur Veranschaulichung beispielhafter Herstellungsverfahren von Ausführungsbeispielen erfindungsgemäßer Lichtumlenkvorrichtungen. Dabei werden die gleichen Bezugszeichen wie in Fig. 1a verwendet. Nachdem eine Mikrostruktur 4 mit mehreren eines hier beispielhaft dargestellten Mikrostrukturelements 6 und ein Lichtleiter 2 bereitgestellt worden sind, kann der Lichtleiter 2 mit der Mikrostruktur 4 versehen werden. Das Versehen des Lichtleiters 2 mit der Mikrostruktur 4 kann beispielsweise ein zumindest teilweises Anpassen zumindest eines Teils der Mikrostrukturelemente 6 an den Lichtleiter 2 umfassen (Fig. 1d). Alternativ kann das Versehen des Lichtleiters 2 mit der Mikrostruktur 4 ein zumindest teilweises Einprägen zumindest eines Teils der Mikrostrukturelemente 6 in den Lichtleiter 2 umfassen (Fig. 1e). Weiter alternativ kann, wie bereits beschrieben, eine Anbindungsschicht 3 auf den Lichtleiter 2 aufgebracht werden und das Versehen des Lichtleiters 2 mit der Mikrostruktur 4 kann ein zumindest teilweises Eintauchen zumindest eines Teils der Mikrostrukturelemente 6 in die Anbindungsschicht 3 umfassen (Fig. 1f).

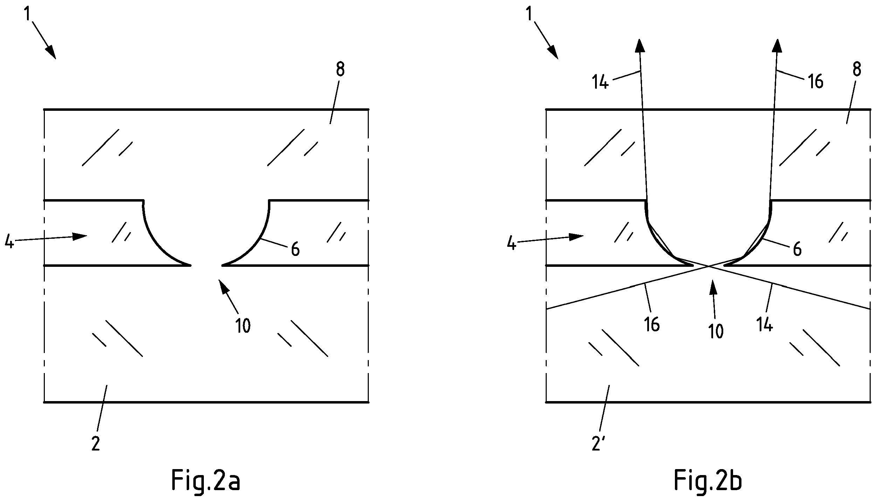

Die Fig. 2a, b veranschaulichen nun die Lichtauskopplung durch die Ausführungsbeispiele aus Fig. 1. Dabei ist beispielhaft die Lichtumlenkvorrichtung 1 aus Fig. 1a dargestellt. Gleiches gilt jedoch für die in Fig. 1b dargestellte Lichtumlenkvorrichtung 1'. Wie bereits beschrieben, ergibt sich durch die Anbindungsschicht (nicht dargestellt) ein effektiver Kontaktbereich oder Öffnungsbereich 10 zwischen Lichtleiter 2 und Mikrostrukturelementen 6, welcher einen Übergang von in den Lichtleiter 2 eingekoppeltem Licht in die Mikrostrukturelemente 6 ermöglicht. In Fig. 2b sind nun beispielhaft zwei Lichtstrahlen 14 und 16 dargestellt, welche in dem Lichtleiter 2 mittels Totalreflexion geführt werden und welche mittels Totalreflexion in dem Mikrostrukturelement 6 ausgekoppelt werden. Lichtstrahl 14 tritt durch den Öffnungsbereich 10 und wird am Rand des Mikrostrukturelements 6 einmal totalreflektiert, bevor der Lichtstrahl 14 durch die der Mikrostruktur 4 gegenüberliegende Oberfläche der Deckschicht 8 ausgekoppelt wird. Lichtstrahl 16 tritt ebenfalls durch den Öffnungsbereich 10 und wird am Rand des Mikrostrukturelements 6 zweimal totalreflektiert, bevor der Lichtstrahl 16 ausgekoppelt wird.

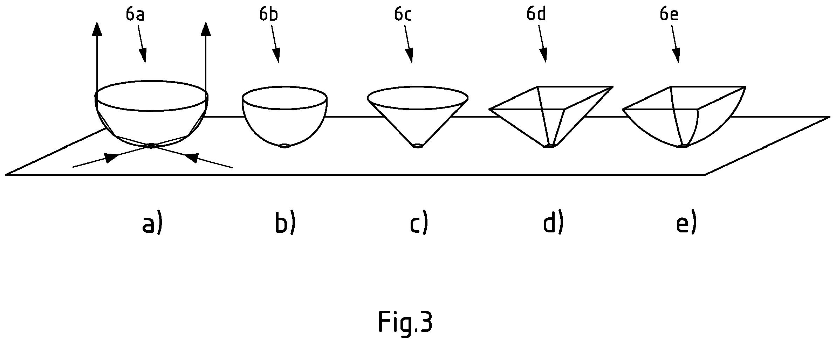

Die Fig. 3a-e zeigen nun schematische perspektivische Darstellungen unterschiedlicher Mikrostrukturelemente 6a - 6e mit im Wesentlichen punktförmiger Geometrie zum Kontakt mit dem Lichtleiter. In Fig. 3a ist exemplarisch die bereits in Zusammenhang mit Fig. 2b beschriebene Auskopplung von Lichtstrahlen dargestellt.

Die in den Fig. 3a, 3b, 3e dargestellten Mikrostrukturelemente 6a, 6b, 6e sind im Querschnitt gesehen zumindest abschnittsweise konvex gewölbt, in diesem Fall im Querschnitt gesehen beidseitig konvex. Das Mikrostrukturelement 6a ist sphärisch linsenförmig, das Mikrostrukturelement 6b ist asphärisch linsenförmig, das Mikrostrukturelement 6e ist kuppelförmig geformt. Alternativ können die Mikrostrukturelemente im Querschnitt gesehen auch zumindest abschnittsweise geradlinig ausgebildet sein, wie in den Fig. 3c, 3d dargestellt. Das Mikrostrukturelement 6c ist kegelförmig, das Mikrostrukturelement 6d ist pyramidenförmig ausgebildet.

Die beschriebenen Mikrostrukturelemente können beispielsweise in einer der beschriebenen Lichtumlenkvorrichtungen zum Einsatz kommen.

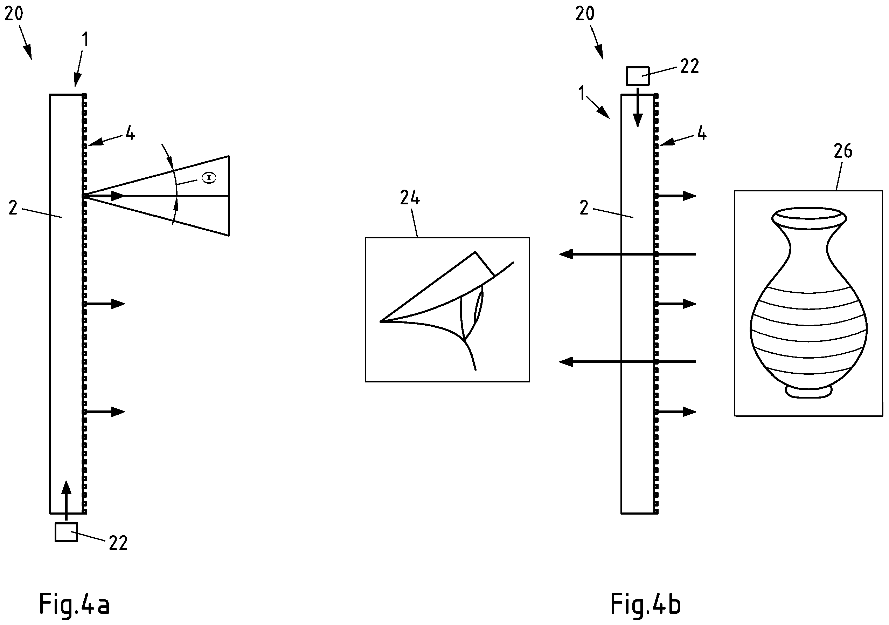

Die Fig. 4a, b zeigen nun schematische Darstellungen eines Ausführungsbeispiels einer erfindungsgemäßen Beleuchtungsvorrichtung 20. Die Beleuchtungsvorrichtung 20 umfasst eine Lichtumlenkvorrichtung 1. Die exemplarisch dargestellte Lichtumlenkvorrichtung 1 kann eine der beschriebenen Lichtumlenkvorrichtungen sein. Die Beleuchtungsvorrichtung umfasst weiterhin zumindest eine an zumindest einem Rand des Lichtleiters 2 angeordnete Beleuchtungsquelle 22 in Form einer oder mehrerer LED zur Einkopplung von Licht über den Rand des Lichtleiters 2. In Fig. 4a ist die Beleuchtungsquelle am unteren Rand, in Fig. 4b am oberen Rand angeordnet. Durch die Mikrostruktur 4 wird das eingekoppelte Licht im Wesentlichen senkrecht ausgekoppelt. Das heißt ein Großteil des ausgekoppelten Lichts wird innerhalb eines Winkels Θ um die Flächennormale des Lichtleiters ausgekoppelt, wie in Fig. 4a dargestellt. Dadurch kann ein Betrachter 24 beispielsweise optimal beleuchtete, hinter der Beleuchtungsvorrichtung 20 angeordnete Gegenstände 26 betrachten.

Die beschriebenen Lichtumlenkvorrichtungen können mittels Ausführungsbeispielen des erfindungsgemäßen Verfahrens hergestellt werden.

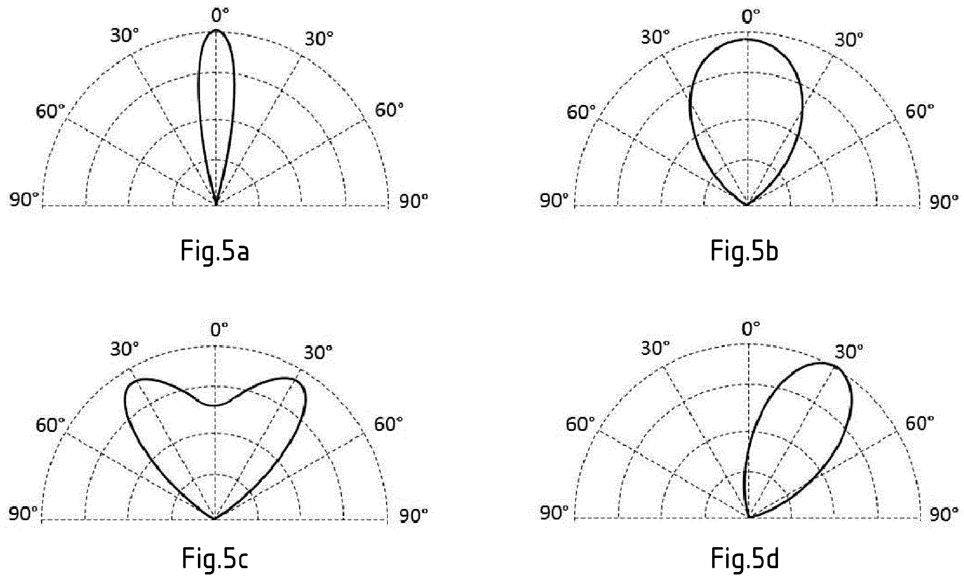

Fig. 5a-d zeigen beispielhafte Lichtverteilungskurven der Lichtauskopplung mittels Ausführungsbeispielen der erfindungsgemäßen Lichtumlenkvorrichtung. In Fig. 5a ist eine im Wesentlichen senkrechte (0°) Lichtauskopplung in ein vergleichsweise schmales Winkelsegment, während in Fig. 5b eine im Wesentlichen senkrechte (0°) Lichtauskopplung in ein vergleichsweise breites Winkelsegment erfolgt. In Fig. 5c ist hingegen eine schräge Lichtauskopplung in zwei Richtungen (-30° und 30°) dargestellt, während in Fig. 5d eine schräge Lichtauskopplung unter einem Winkel in nur eine Richtung (30°) gezeigt ist.

## Patentansprüche

1. Lichtumlenkvorrichtung umfassend:
- einen flächigen, transparenten Lichtleiter (2, 2'),
- eine zumindest bereichsweise auf dem Lichtleiter vorgesehene Mikrostruktur (4, 4') zur Auskopplung von in den Lichtleiter (2, 2`) eingekoppeltem Licht und
- eine zumindest bereichsweise auf den Lichtleiter (2, 2') flächig aufgebrachte, transparente Deckschicht (8, 8'),
wobei die Mikrostruktur (4, 4`) Mikrostrukturelemente (6, 6', 6a - 6i) aufweist, wobei die Mikrostruktur (4, 4') zwischen der Deckschicht (8, 8') und dem Lichtleiter (2, 2') vorgesehen ist, wobei die Deckschicht (8, 8') auf der dem Lichtleiter (2, 2') zugewandten Oberfläche die Mikrostruktur (4, 4') zur Auskopplung von in den Lichtleiter (2, 2') eingekoppeltem Licht aufweist und wobei zumindest ein Teil der Mikrostrukturelemente (6, 6', 6a, 6b, 6e, 6f, 6g) der Mikrostruktur (4, 4') im Querschnitt gesehen zumindest abschnittsweise konvex gewölbt ist, wobei die Mikrostrukturelemente (6, 6', 6a - 6i) jeweils eine im Wesentlichen punktförmige Geometrie zum Kontakt mit dem Lichtleiter (2, 2') aufweisen,
**dadurch gekennzeichnet, dass**
die Breite des effektiven Kontaktbereichs der Mikrostrukturelemente (6, 6', 6a - 6i) mit dem Lichtleiter (2, 2') im Bereich der im Wesentlichen punktförmigen Geometrie im Querschnitt gesehen höchstens 10 µm breit ist, und die Mikrostruktur (4, 4') derart ausgebildet ist, dass mindestens 50% des ausgekoppelten Lichts in einen Winkelbereich von höchstens 30° um eine oder mehrere gewünschte Richtungen herum abgegeben wird.

2. Lichtumlenkvorrichtung nach Anspruch 1, wobei zumindest ein Teil der Mikrostrukturelemente (6, 6', 6a - 6i) der Mikrostruktur (4, 4') durch separate Mikrokörper (12') gebildet sind.

3. Lichtumlenkvorrichtung nach Anspruch 1 oder 2, wobei zumindest ein Teil der Mikrostrukturelemente (6, 6', 6a - 6i) der Mikrostruktur (4, 4') mittels einer Anbindungsschicht (3) mit dem Lichtleiter (2, 2') verbunden sind.

4. Lichtumlenkvorrichtung nach einem der Ansprüche 1 bis 2, wobei zumindest ein Teil der Mikrostrukturelemente (6, 6', 6a - 6i) der Mikrostruktur (4, 4') in den Lichtleiter (2, 2') eingeprägt sind.

5. Lichtumlenkvorrichtung nach einem der Ansprüche 1 bis 4, wobei zumindest ein Teil der Mikrostrukturelemente (6, 6', 6c, 6d, 6h, 6i) der Mikrostruktur (4, 4`) im Querschnitt gesehen zumindest abschnittsweise geradlinig ausgebildet sind.

6. Lichtumlenkvorrichtung nach einem der Ansprüche 1 bis 5, wobei die Mikrostruktur zur Auskopplung von in den Lichtleiter eingekoppeltem Licht zumindest teilweise mittels zumindest einer Totalreflexion innerhalb der Mikrostrukturelemente ausgebildet ist.

7. Lichtumlenkvorrichtung nach einem der Ansprüche 1 bis 6, wobei die Mikrostruktur (4, 4') zur Auskopplung von in den Lichtleiter (2, 2') eingekoppeltem Licht quer zur Oberfläche des Lichtleiters (2, 2') ausgebildet ist.

8. Lichtumlenkvorrichtung nach einem der Ansprüche 1 bis 7, wobei die Mikrostrukturelemente (6, 6', 6a - 6i) der Mikrostruktur (2, 2') zumindest abschnittsweise eine im Wesentlichen konstante oder variierende Anordnungsdichte aufweisen.

9. Verfahren zur Herstellung einer Lichtumlenkvorrichtung, insbesondere einer Lichtumlenkvorrichtung nach einem der Ansprüche 1 bis 8, das Verfahren umfassend die Schritte:
- Bereitstellen eines flächigen, transparenten Lichtleiters (2, 2'),
- Versehen des Lichtleiters (2, 2') mit einer Mikrostruktur (4, 4') zur Auskopplung von in den Lichtleiter (2, 2') eingekoppeltem Licht und
- Aufbringen einer flächigen, transparenten Deckschicht (8, 8') zumindest bereichsweise auf den Lichtleiter (2, 2'), wobei die Mikrostruktur (4, 4') zwischen dem Lichtleiter (2, 2') und der Deckschicht (8, 8') vorgesehen wird,
wobei die Mikrostruktur (4, 4') Mikrostrukturelemente (6, 6', 6a - 6i) aufweist, wobei die Deckschicht (8, 8') auf der dem Lichtleiter (2, 2') zugewandten Oberfläche die Mikrostruktur (4, 4') zur Auskopplung von in den Lichtleiter (2, 2') eingekoppeltem Licht aufweist und wobei zumindest ein Teil der Mikrostrukturelemente (6, 6', 6a, 6b, 6e, 6f, 6g) der Mikrostruktur (4, 4') im Querschnitt gesehen zumindest abschnittsweise konvex gewölbt ist, wobei die Mikrostrukturelemente (6, 6', 6a - 6i) jeweils eine im Wesentlichen punktförmige Geometrie zum Kontakt mit dem Lichtleiter (2, 2') aufweisen,
**dadurch gekennzeichnet, dass**
die Breite des effektiven Kontaktbereichs der Mikrostrukturelemente (6, 6', 6a - 6i) mit dem Lichtleiter (2, 2') im Bereich der im Wesentlichen punktförmigen Geometrie im Querschnitt gesehen höchstens 10 µm breit ist, und die Mikrostruktur (4, 4') derart ausgebildet ist, dass mindestens 50% des ausgekoppelten Lichts in einen Winkelbereich von höchstens 30° um eine oder mehrere gewünschte Richtungen herum abgegeben wird.

10. Verfahren nach Anspruch 9, wobei die Mikrostrukturelemente (6, 6', 6a - 6i) der Mikrostruktur (4, 4') durch separate Mikrokörper (12') bereitgestellt werden, welche zwischen der Deckschicht (8, 8') und dem Lichtleiter (2, 2') angeordnet werden.

11. Verfahren nach Anspruch 9 oder 10, wobei das Versehen des Lichtleiters (2, 2') mit der Mikrostruktur (4, 4') ein zumindest teilweises Anpassen zumindest eines Teils der Mikrostrukturelemente (6, 6', 6a - 6i) im Bereich der im Wesentlichen punktförmigen Geometrie an den Lichtleiter (2, 2') umfasst.

12. Verfahren nach einem der Ansprüche 9 bis 11, wobei das Versehen des Lichtleiters (2, 2') mit der Mikrostruktur (4, 4') ein zumindest teilweises Einprägen zumindest eines Teils der Mikrostrukturelemente (6, 6', 6a - 6i) in den Lichtleiter (2, 2') umfasst.

13. Verfahren nach einem der Ansprüche 9 bis 12, das Verfahren weiterhin umfassend:
- Aufbringen einer Anbindungsschicht (3) auf den Lichtleiter (2, 2'),
wobei das Versehen des Lichtleiters (2, 2') mit der Mikrostruktur (4, 4`) ein zumindest teilweises Eintauchen zumindest eines Teils der Mikrostrukturelemente (6, 6', 6a - 6i) in die Anbindungsschicht (3) umfasst.

14. Beleuchtungsvorrichtung, umfassend:
- eine Lichtumlenkvorrichtung (1, 1') nach einem der Ansprüche 1 bis 8, und
- zumindest eine an zumindest einem Rand des Lichtleiters angeordnete Beleuchtungsquelle (22) zur Einkopplung von Licht über den zumindest einen Rand des Lichtleiters (2, 2').

15. Verwendung einer Lichtumlenkvorrichtung (1, 1') nach einem der Ansprüche 1 bis 8 oder einer Beleuchtungsvorrichtung (20) nach Anspruch 14 für ein raumbildendes Bauelement, für eine Raumleuchte, für eine Leuchte im Außenbereich, für eine Leuchte in Fahrzeugen oder für eine Displaybeleuchtung.

## Claims

1. Light deflecting device comprising:
- an areal, transparent light guide (2, 2'),
- a microstructure (4, 4') provided on the light guide at least in regions for coupling out light coupled into the light guide (2, 2') and
- a transparent cover layer (8, 8') applied areally to the light guide (2, 2') at least in regions,
wherein the microstructure (4, 4') has microstructure elements (6, 6', 6a - 6i), wherein the microstructure (4, 4') is provided between the cover layer (8, 8') and the light guide (2, 2'), wherein the cover layer (8, 8'), on the surface facing the light guide (2, 2'), has the microstructure (4, 4') for coupling out light coupled into the light guide (2, 2'), and wherein at least a part of the microstructure elements (6, 6', 6a, 6b, 6e, 6f, 6g) of the microstructure (4, 4') is convexly curved at least in sections when viewed in cross section, wherein the microstructure elements (6, 6', 6a - 6i) each have a substantially point-like geometry for contact with the light guide (2, 2'),
**characterised in that**
the width of the effective contact region of the microstructure elements (6, 6', 6a - 6i) with the light guide (2, 2'), in the region of the substantially point-like geometry, is at most 10 µm wide when viewed in cross section, and the microstructure (4, 4') is formed such that at least 50% of the outcoupled light is emitted in an angular range of at most 30° around one or more desired directions.

2. Light deflecting device according to claim 1, wherein at least a part of the microstructure elements (6, 6', 6a - 6i) of the microstructure (4, 4') are formed by separate micro-bodies (12').

3. Light deflecting device according to claim 1 or 2, wherein at least a part of the microstructure elements (6, 6', 6a - 6i) of the microstructure (4, 4') are connected to the light guide (2, 2') by means of a bonding layer (3).

4. Light deflecting device according to one of claims 1 to 2, wherein at least a part of the microstructure elements (6, 6', 6a - 6i) of the microstructure (4, 4') are embossed into the light guide (2, 2').

5. Light deflecting device according to one of claims 1 to 4, wherein at least a part of the microstructure elements (6, 6', 6c, 6d, 6h, 6i) of the microstructure (4, 4') are formed linearly at least in sections when viewed in cross section.

6. Light deflecting device according to one of claims 1 to 5, wherein the microstructure is formed for coupling out light coupled into the light guide at least partially by means of at least one total reflection within the microstructure elements.

7. Light deflecting device according to one of claims 1 to 6, wherein the microstructure (4, 4') is formed for coupling out light coupled into the light guide (2, 2') transversely to the surface of the light guide (2, 2').

8. Light deflecting device according to one of claims 1 to 7, wherein the microstructure elements (6, 6', 6a - 6i) of the microstructure (2, 2') have a substantially constant or varying arrangement density at least in sections.

9. Method for manufacturing a light deflecting device, in particular a light deflecting device according to one of claims 1 to 8, the method comprising the steps:
- providing an areal, transparent light guide (2, 2'),
- providing the light guide (2, 2') with a microstructure (4, 4') for coupling out light coupled into the light guide (2, 2') and
- applying an areal, transparent cover layer (8, 8') to the light guide (2, 2') at least in regions, wherein the microstructure (4, 4') is provided between the light guide (2, 2') and the cover layer (8, 8'),
wherein the microstructure (4, 4') has microstructure elements (6, 6', 6a - 6i), wherein the cover layer (8, 8'), on the surface facing the light guide (2, 2'), has the microstructure (4, 4') for coupling out light coupled into the light guide (2, 2') and wherein at least a part of the microstructure elements (6, 6', 6a, 6b, 6e, 6f, 6g) of the microstructure (4, 4') is convexly curved at least in sections when viewed in cross-section, wherein the microstructure elements (6, 6', 6a - 6i) each have a substantially point-like geometry for contact with the light guide (2, 2'), **characterised in that**
the width of the effective contact region of the microstructure elements (6, 6', 6a - 6i) with the light guide (2, 2'), in the region of the substantially point-like geometry, is at most 10 µm wide when viewed in cross section, and the microstructure (4, 4') is formed such that at least 50% of the outcoupled light is emitted in an angular range of at most 30° around one or more desired directions.

10. Method according to claim 9, wherein the microstructure elements (6, 6', 6a - 6i) of the microstructure (4, 4') are provided by separate micro-bodies (12') which are arranged between the cover layer (8, 8') and the light guide (2, 2').

11. Method according to claim 9 or 10, wherein providing the light guide (2, 2') with the microstructure (4, 4') comprises at least partially adjusting at least a part of the microstructure elements (6, 6', 6a - 6i) in the region of the substantially point-like geometry to the light guide (2, 2').

12. Method according to one of claims 9 to 11, wherein providing the light guide (2, 2') with the microstructure (4, 4') comprises at least partially embossing at least a part of the microstructure elements (6, 6', 6a - 6i) into the light guide (2, 2').

13. Method according to one of claims 9 to 12, the method further comprising:
- applying a bonding layer (3) to the light guide (2, 2'),
wherein providing the light guide (2, 2') with the microstructure (4, 4') comprises at least partially immersing at least a part of the microstructure elements (6, 6', 6a - 6i) into the bonding layer (3).

14. Illumination device, comprising:
- a light deflecting device (1, 1') according to one of claims 1 to 8, and
- at least one illumination source (22) arranged on at least one edge of the light guide for coupling in light via the at least one edge of the light guide (2, 2').

15. Use of a light deflecting device (1, 1') according to one of claims 1 to 8 or of an illumination device (20) according to claim 14 for a space-forming structural element, for a room luminaire, for an outdoor luminaire, for a luminaire in vehicles or for a display illumination.

## Revendications

1. Dispositif de déviation de lumière comprenant :
- un guide de lumière aréolaire et transparent (2, 2'),
- une microstructure (4, 4') prévue au moins par zones sur le guide de lumière pour le découplage de lumière couplée dans le guide de lumière (2, 2') et
- une couche de couverture (8, 8') transparente, appliquée de manière aréolaire sur le guide de lumière (2, 2') au moins par zones,
la microstructure (4, 4') ayant des éléments de microstructure (6, 6', 6a - 6i), la microstructure (4, 4') étant prévue entre la couche de couverture (8, 8') et le guide de lumière (2, 2'), la couche de couverture (8, 8') ayant, sur la surface tournée vers le guide de lumière (2, 2'), la microstructure (4, 4') pour le découplage de lumière couplée dans le guide de lumière (2, 2') et au moins une partie des éléments de microstructure (6, 6', 6a, 6b, 6e, 6f, 6g) de la microstructure (4, 4') étant voûtée de manière convexe au moins par sections, vu en coupe transversale, les éléments de microstructure (6, 6', 6a-6i) ayant chacun une géométrie sensiblement ponctuelle pour le contact avec le guide de lumière (2, 2'),
**caractérisé en ce que**
la largeur de la zone de contact effective des éléments de microstructure (6, 6', 6a - 6i) avec le guide de lumière (2, 2'), dans la zone de la géométrie essentiellement ponctuelle, est d'au plus 10 µm de large, vu en coupe transversale, et la microstructure (4, 4') est formée de telle sorte qu'au moins 50 % de la lumière découplée est émise dans une plage angulaire d'au plus 30° autour d'une ou plusieurs directions souhaitées.

2. Dispositif de déviation de lumière selon la revendication 1, au moins une partie des éléments de microstructure (6, 6', 6a - 6i) de la microstructure (4, 4') étant formés par des microcorps séparés (12').

3. Dispositif de déviation de lumière selon la revendication 1 ou 2, au moins une partie des éléments de microstructure (6, 6', 6a à 6i) de la microstructure (4, 4') étant reliés au guide de lumière (2, 2') au moyen d'une couche de liaison (3).

4. Dispositif de déviation de lumière selon l'une des revendications 1 à 2, au moins une partie des éléments de microstructure (6, 6', 6a-6i) de la microstructure (4, 4') étant imprimés dans le guide de lumière (2, 2').

5. Dispositif de déviation de lumière selon l'une des revendications 1 à 4, au moins une partie des éléments de microstructure (6, 6', 6c, 6d, 6h, 6i) de la microstructure (4, 4'), vu en coupe transversale, étant formés au moins par sections linéairement.

6. Dispositif de déviation de lumière selon l'une des revendications 1 à 5, la microstructure étant formée pour le découplage de lumière couplée dans le guide de lumière au moins partiellement au moyen d'au moins une réflexion totale à l'intérieur des éléments de microstructure.

7. Dispositif de déviation de lumière selon l'une des revendications 1 à 6, la microstructure (4, 4') étant formée pour le découplage de lumière couplée dans le guide de lumière (2, 2') transversalement à la surface du guide de lumière (2, 2').

8. Dispositif de déviation de lumière selon l'une des revendications 1 à 7, les éléments de microstructure (6, 6', 6a à 6i) de la microstructure (2, 2') ayant, au moins par sections, une densité d'agencement sensiblement constante ou variable.

9. Procédé pour la fabrication d'un dispositif de déviation de lumière, en particulier d'un dispositif de déviation de lumière selon l'une des revendications 1 à 8, le procédé comprenant les étapes suivantes :
- la fourniture d'un guide de lumière aréolaire et transparent (2, 2'),
- l'équipement du guide de lumière (2, 2') avec une microstructure (4, 4') pour le découplage de lumière couplée dans le guide de lumière (2, 2') et
- l'application d'une couche de couverture (8, 8') aréolaire et transparente au moins par zones sur le guide de lumière (2, 2'), la microstructure (4, 4') étant prévue entre le guide de lumière (2, 2') et la couche de couverture (8, 8'),
la microstructure (4, 4') ayant des éléments de microstructure (6, 6', 6a - 6i), la couche de couverture (8, 8') ayant, sur la surface tournée vers le guide de lumière (2, 2'), la microstructure (4, 4') pour le découplage de lumière couplée dans le guide de lumière (2, 2') et au moins une partie des éléments de microstructure (6, 6', 6a, 6b, 6e, 6f, 6g) de la microstructure (4, 4') étant voûtée de manière convexe au moins par sections, vu en coupe transversale, les éléments de microstructure (6, 6', 6a-6i) ayant chacun une géométrie sensiblement ponctuelle pour le contact avec le guide de lumière (2, 2'),
**caractérisé en ce que**
la largeur de la zone de contact effective des éléments de microstructure (6, 6', 6a - 6i) avec le guide de lumière (2, 2'), dans la zone de la géométrie essentiellement ponctuelle, est d'au plus 10 µm de large, vu en coupe transversale, et la microstructure (4, 4') est formée de telle sorte qu'au moins 50 % de la lumière découplée est émise dans une plage angulaire d'au plus 30° autour d'une ou plusieurs directions souhaitées.

10. Procédé selon la revendication 9, les éléments de microstructure (6, 6', 6a - 6i) de la microstructure (4, 4') étant fournis par des microcorps séparés (12') qui sont disposés entre la couche de couverture (8, 8') et le guide de lumière (2, 2').

11. Procédé selon la revendication 9 ou 10, l'équipement du guide de lumière (2, 2') avec la microstructure (4, 4') comprenant une adaptation au moins partielle d'au moins une partie des éléments de microstructure (6, 6', 6a - 6i) dans la zone de la géométrie essentiellement ponctuelle au guide de lumière (2, 2').

12. Procédé selon l'une des revendications 9 à 11, l'équipement du guide de lumière (2, 2') avec la microstructure (4, 4') comprenant une empreinte au moins partielle d'au moins une partie des éléments de microstructure (6, 6', 6a - 6i) dans le guide de lumière (2, 2').

13. Procédé selon l'une des revendications 9 à 12, le procédé comprenant en outre :
- l'application d'une couche de liaison (3) sur le guide de lumière (2, 2'), l'équipement du guide de lumière (2, 2') avec la microstructure (4, 4') comprenant une immersion au moins partielle d'au moins une partie des éléments de microstructure (6, 6', 6a - 6i) dans la couche de liaison (3).

14. Dispositif d'éclairage comprenant :
- un dispositif de déviation de lumière (1, 1') selon l'une des revendications 1 à 8, et
- au moins une source d'éclairage (22) disposée sur au moins un bord du guide de lumière pour le couplage de lumière via l'au moins un bord du guide de lumière (2, 2').

15. Utilisation d'un dispositif de déviation de lumière selon l'une des revendications 1 à 8 ou d'un dispositif d'éclairage selon la revendication 14 pour un élément de construction formant un espace, pour un luminaire d'intérieur, pour un luminaire d'extérieur, pour un luminaire dans des véhicules ou pour un éclairage d'affichage.
